# EUROPÄISCHE PATENTSCHRIFT

(11) **EP 0 885 653 B1**
(45) Veröffentlichungstag und Bekanntmachung des Hinweises auf die Patenterteilung: **29.01.2003**
(21) Anmeldenummer: 98110491.2
(22) Anmeldetag: 08.06.1998
(51) Int. Cl.: B01J 10/00, B01J 12/00, B01J 14/00, B01J 15/00, B01J 16/00, B01J 19/24, B01J 19/32, B01J 19/00

(54) **Kompakter Festbettreaktor für katalytische Reaktionen mit integriertem Wärmeaustausch**
Compact fixed bed reactor for catalytic reactions with integral heat exchange
Réacteur à lit fixe avec échange de chaleur intégrée pour des réactions catalytiques

(30) Priorität: 16.06.1997 DE 19725378
(43) Veröffentlichungstag der Anmeldung: 23.12.1998
(73) Patentinhaber: Friedrich, Gerhard, 75428 Illingen (DE); Opferkuch, Frank, 72622 Nürtingen (DE); Gaiser, Gerd, 72768 Reutlingen (DE); Kolios, Grigorios, 70197 Stuttgart (DE); Eigenberger, Gerhart, 70597 Stuttgart (DE)
(72) Erfinder: Friedrich, Gerhard, 75428 Illingen (DE); Opferkuch, Frank, 72622 Nürtingen (DE); Gaiser, Gerd, 72768 Reutlingen (DE); Kolios, Grigorios, 70197 Stuttgart (DE); Eigenberger, Gerhart, 70597 Stuttgart (DE)
(74) Vertreter: Dreiss, Fuhlendorf, Steimle & Becker

(56) Entgegenhaltungen:
- EP-A- 0 154 674
- DE-A- 2 016 614
- US-A- 4 514 377
- US-A- 4 731 229
- US-A- 5 094 074
- US-A- 5 538 700

## Beschreibung

Die Erfindung betrifft kompakte Reaktoren für katalysierte chemische Umsetzungen in gasförmiger oder flüssiger Phase, die von zwei Stoffströmen im Gleich- oder Gegenstrom durchströmt werden, wobei ein sehr guter Wärmekontakt zum Katalysator und zwischen den beiden Strömen gewährleistet ist.

Entsprechende Reaktoren werden für unterschiedliche Aufgabenstellungen in der chemischen Reaktionstechnik benötigt. So besteht bei sog. "isothermen" Festbettreaktoren die Aufgabe, Gase an festen Katalysatoren so reagieren zu lassen, dass die entstehende oder benötigte Reaktionswärme möglichst direkt von einem Wärmeträgerfluid aufgenommen oder abgegeben werden kann. Bei autothermen Festbettreaktoren soll die Wärme der heißen Reaktionsgase möglichst direkt auf den kalt einströmenden Zulauf übertragen werden. Bei endothermen Reaktionen wäre die direkte Kopplung mit einer im gleichen Temperaturbereich ablaufenden exothermen Begleitreaktion wünschenswert. Außerdem erfordert eine optimale Reaktionsführung häufig die Einstellung von speziellen, örtlich veränderlichen Temperaturprofilen, was durch eine spezielle Wärmeträgerführung oder die Einstellung von unterschiedlichen Temperaturstufen des Wärmeträgers erreicht werden kann.

Technische Festbettreaktoren sind heute entweder in Form von Schüttschichtreaktoren oder als Monolithreaktoren im Einsatz. Eine Wärmezu- oder abfuhr in/aus Schüttschichtreaktoren gelingt, wenn man den Katalysator in Rohre packt, die von einem Wärmeträger umströmt werden, oder wenn man Rohrschlangen mit einem Wärmeträger in der Schüttung platziert. Durch die dabei vorliegenden längeren Wärmetransportwege treten allerdings größere Temperaturunterschiede zwischen Katalysator und Wärmeträger mit negativen Auswirkungen auf die chemische Umsetzung auf.

Es wurden daher unterschiedliche Konzepte für katalytische Festbettreaktoren vorgeschlagen, bei denen für eine Verbesserung der Wärmeübertragung zwischen Katalysator und Wärmeträger eine von Plattenwärmetauschern bekannte Anordnung übernommen wird. So offenbart die US-A-5,538,700 einen katalytischen Reaktor mit integriertem Wärmetauscher in Form eines Plattenwärmetauschers, der im Kreuzstrom vom Reaktionsgemisch und von einem Wärmetauschmittel durchströmt wird. Die das Wärmetauschmedium führenden Querschnitte sind dabei so gestaltet, dass die Turbulenz des strömenden Wärmetauschmediums und damit der Wärmeübertragung an die Wand gesteuert wird. Die einzelnen Platten sind hierbei zu einem Stapel zusammengefasst.

Nachteilig dabei sind die Kreuzstromführungen, die im Unterschied zu einer Gegenstromführung keinen effizienten Wärmerücktausch zulässt, die Anordnung des Katalysators und die insgesamt sehr komplexe und damit teure Reaktorkonstruktion.

Ebenfalls vorgeschlagen wurden unterschiedliche Konzepte für katalytische Wandreaktoren, bei denen der Katalysator direkt auf die Reaktorwand aufgebracht wird. Bisher hat sich keines dieser Konzepte durchsetzen können, da Katalysatoren in der Regel nach einer bestimmten Laufzeit ersetzt werden müssen, was für Wandreaktoren bisher nicht befriedigend gelöst ist.

Monolithreaktoren zeichnen sich im Gegensatz zu Schüttschichtreaktoren durch eine sehr regelmäßige Katalysatorenstruktur mit gleichmäßigen Reaktionsbedingungen und niedrigem Druckverlust aus. Allerdings sind bisher trotz intensiver Bemühungen keine überzeugenden Konzepte bekannt geworden, Monolithkatalysatoren in üblichen Rohrbündelreaktoren einzusetzen. Monolithkatalysatoren werden deshalb bisher in aller Regel adiabat betrieben.

Ein Beispiel dafür ist US-PS-4,731,229, in dem der Katalysator auf gefalteten Blechen in den Zwischenräumen von gekreuzten Wellstrukturen angeordnet ist. Damit wird zwar eine hohe Packungsdichte des Katalysators bei mäßigem Durchströmungsdruckverlust erreicht. Allerdings eignet sich diese Anordnung nur für adiabate Reaktoren und erlaubt keine Wärmezu- oder abfuhr in bzw. aus der Reaktionszone.

Es wurde von Rhone Poulenc vorgeschlagen, keramische Monolithe so zu präparieren, dass benachbarte Kanäle mit unterschiedlichen Fluiden durchströmt werden können. Dies ergibt sich auch aus US-PS-4,271,110 und US-PS-4,780,196. Bei der Desaktivierung des Katalysators muss der gesamte Monolith ausgewechselt werden. Außerdem bereitet die getrennte Anströmung unterschiedlicher Kanäle und die mechanisch/thermische Stabilität keramischer Monolithe erhebliche Schwierigkeiten bei einem großtechnischen Einsatz.

Eine in jüngster Zeit sehr stark vertretene Forderung betrifft sehr kompakte Reaktoren mit intensivem Wärmeaustausch zu einem fluiden Wärmeträger. Unter dem Schlagwort "Mikroreaktoren" werden solche Reaktoren für die dezentrale Produktion potentiell gefährlicher Chemikalien vorgeschlagen. Allerdings sind die dafür bekanntgewordenen Konzepte und Fertigungsverfahren aus der Mikroelektronik oder der Mikrosystemtechnik entlehnt und damit eher für Strukturen im µ-Bereich als im mm-Bereich geeignet. Strömungskanäle mit Abmessungen kleiner als 1 mm erscheinen aber für viele reaktionstechnische Anforderungen weder erforderlich noch vorteilhaft.

Es stellt sich somit die Aufgabe, ein Reaktorkonzept zu entwickeln, bei dem der Katalysator ähnlich wie bei einem katalytischen Wandreaktor in sehr engem Kontakt zum Wärmeträger angeordnet ist, aber trotzdem einfach aus dem Reaktor entfernt und ersetzt werden kann. Dabei sollen die Strömungskanäle einen ähnlich guten Stoffübergang und niedrigen Druckverlust wie Monolithkatalysatoren besitzen. Außerdem soll der Reaktor einfach aufgebaut und zu fertigen sein und ein weites Spektrum unterschiedlicher Strömungsführungen von Fluid und Wärmeträger ermöglichen.

Diese Aufgabe wird erfindungsgemäß durch einen Reaktor mit den Merkmalen des Anspruchs 1 gelöst. Nach Art eines Plattenwärmeaustauschers wird Reaktionsfluid und Wärmeträger in benachbarten Kanälen im Gleich- oder Gegenstrom geführt. Der Katalysator ist wie bei metallischen Autoabgaskatalysatoren auf einer Wellstruktur aufgebracht. Diese wird so in den Fluidkanälen befestigt, daß sie gleichzeitig Strömungskanäle für das Fluid bildet, als Abstandshalter zwischen den Wärmetauscherplatten fungiert und durch ihren direkten Kontakt für einen verbesserten Wärmetransport von den Wänden zum Katalysator und in das Fluid sorgt. Auf der Wärmeträgerseite werden vergleichbare Wellstrukturen, ggf. mit anderen Abmessungen und ohne Katalysatorbeschichtung, eingesetzt. Um die katalysatorbeschichteten Wellstrukturen ggf. auswechseln zu können, sind die Plattenpakete nicht wie in gelöteten oder geschweißten Plattenwärmetauscher starr miteinander verbunden, sondern flexibel aufgebaut. Das wird dadurch erreicht, daß die Trennwände aus einem längeren Blechband durch ziehharmonikaartige Faltung hergestellt sind und von einem äußeren, demontierbaren Gehäuse umschlossen werden. Eine Konstruktion mit einer ziehharmonikaförmigen Trennwand ist von Luft-Gegenstromwärmetauschern (System Thermo-Z) im Prinzip bekannt. Sie dient hier aber der Auswechselbarkeit der katalytisch beschichteten Wellstrukturen.

Die in Anspruch 1 beschriebene Grundform der Erfindung kann in geeigneter Weise ergänzt und an die spezifischen reaktionstechnischen Anforderungen angepaßt werden. Entsprechende Ausgestaltungen sind in den Unteransprüchen beschrieben und werden anhand der nachfolgenden Abbildungen erläutert.

Es zeigen
Figur 1 einen Ausschnitt des erfindungsgemäßen Reaktors, bei dem der äußere Mantel entfernt ist
Figur 2 einen Reaktorquerschnitt und eine Frontansicht
Figur 3 drei Möglichkeiten für die Führung der Strömungswege
Figur 4 vier Varianten für die Ausbildung der Wellstrukturen 4 und
Figur 5 eine Variante in zylinderförmiger Anordnung

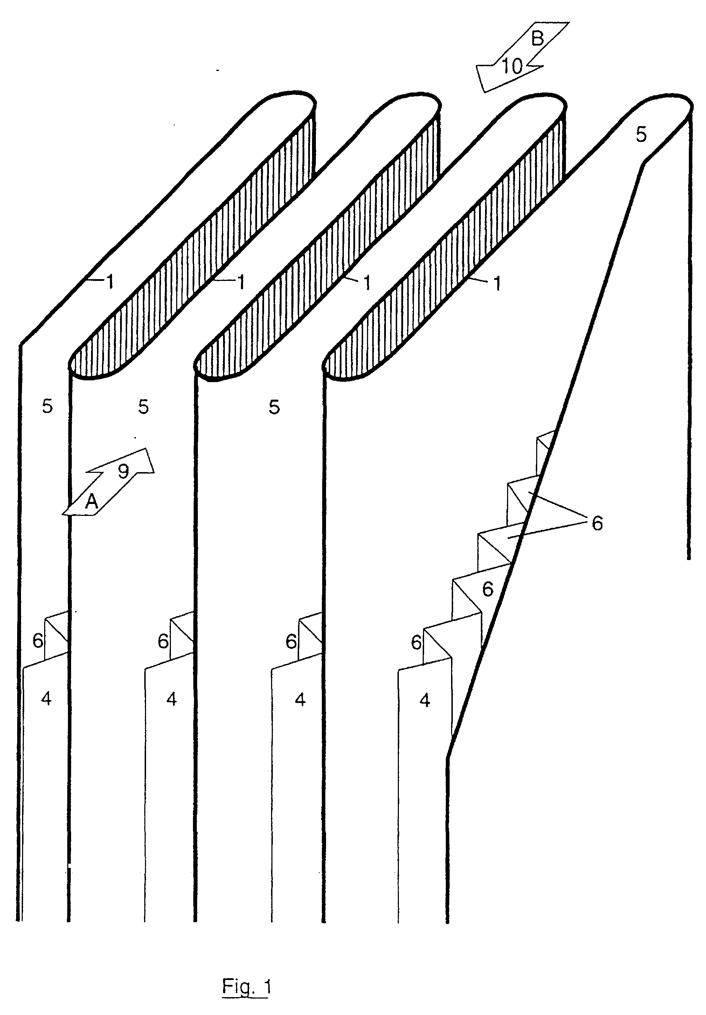

Fig. 1 zeigt einen Ausschnitt des erfindungsgemäßen Reaktors, bei dem der äußere Mantel einschließlich der oberen Abdeckung entfernt ist. Fluid A und B treten entlang der Strömungswege 9 und 10 an entgegengesetzten Seiten der ziehharmonikaförmigen Trennwand 1 in den Reaktor ein, verteilen sich auf die jeweiligen Strömungskanäle 5 und werden nach unten abgelenkt. Im Beispiel ist Fluid A (Strömungsweg 9) z.B. ein Reaktandengemisch, Fluid B (Strömungsweg 10) ein nicht reagierender Wärmeträger. Beide Fluide durchströmen die Strömungspfade 6, die von den Wellstrukturen 4 und den Wänden 1 gebildet werden. Die Wellstrukturen 4 sind im Strömungsweg 9 über eine bestimmte Länge mit Katalysator beschichtet. Daran findet die Reaktion von Fluid A statt. Die freigesetzte oder benötigte Reaktionswärme wird zum großen Teil durch Wärmeleitung in der Struktur 4 auf die Wand 1 übertragen, da die Struktur beide Nachbarwände berührt. Sie wird auf der anderen Wandseite in ähnlicher Weise von einer anderen Struktur 4 aufgenommen und über diese Struktur oder direkt an das Wärmeträgerfluid B übertragen. Am unteren Ende des Reaktors hört die Struktur 4 früher auf als die Wand 1, so daß die Strömungswege 9, 10 in umgekehrter Richtung wie am gezeigten Kopf den Reaktor verlassen. Ein hier nicht gezeigter Reaktormantel umschließt den dargestellten Innenbereich von allen Seiten, so daß die Fluide A, B nur durch Einlässe am Kopf ein- und am Reaktorfuß austreten können.

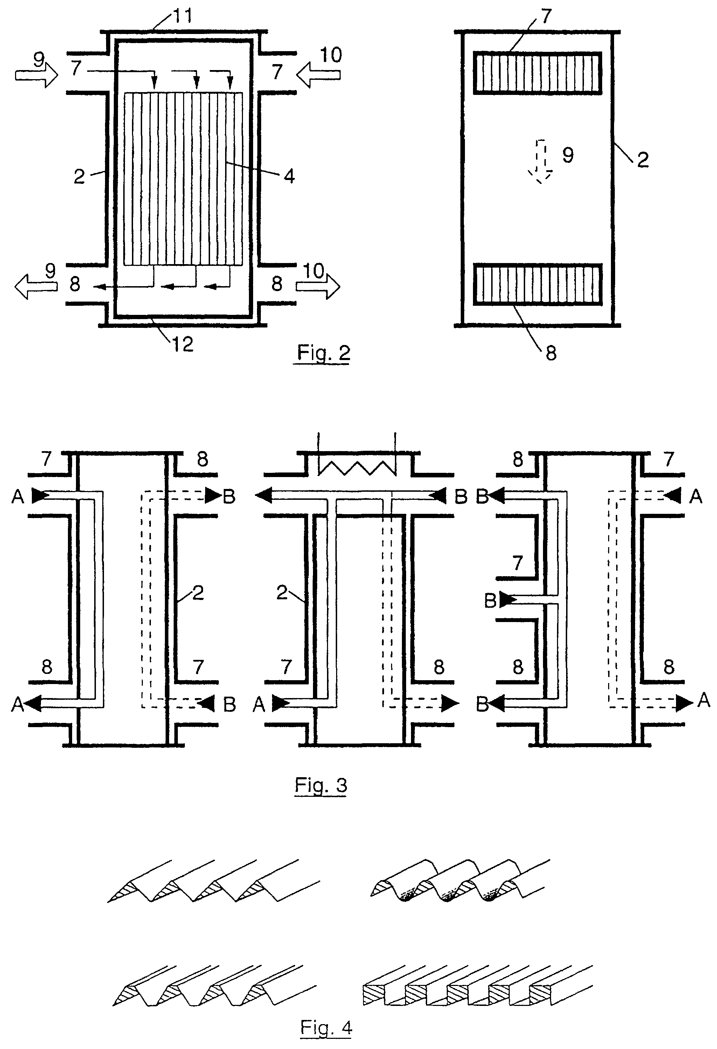

Fig. 2 zeigt einen Schnitt (links) und eine Frontansicht (rechts) des Reaktors von Fig. 1 mit den beiden Fluideinlässen 7 und -auslässen 8 und den Abdichtungen der Strömungskanäle 5 an beiden Stirnseiten 11, 12 des Reaktors.

Fig. 3 zeigt Reaktorvarianten mit drei unterschiedlichen Strömungsführungen für die beiden Fluide A, B. Die linke Konfiguration bietet sich an, wenn eine exotherme Reaktion (Fluid A) so mit einer endothermen Reaktion (Fluid B) gekoppelt wird, daß die Reaktionswärme der exothermen Reaktion den Wärmebedarf der endothermen Reaktion liefert.

Fig. 3, Mitte, ist eine typische Konfiguration für die autotherme Reaktionsführung einer schwach exothermen Reaktion des Fluids A, wobei im unteren Teil des Reaktors der kalte Zulauf durch den warmen Ablauf vorgeheizt wird. Am Kopf befindet sich eine zusätzliche Heizoder Kühleinrichtung 13, durch die der Reaktor gezündet oder während des Betriebs Wärme abgeführt werden kann. Die beiden Stutzen am Kopf dienen zur Zuführung eines Fluid B (Seiteneinspeisung) bzw. zum Abzug eines Teilstroms.

Fig. 3, rechts, zeigt eine weitere Gestaltungsmöglichkeit, bei der ein Wärmeträger B im oberen Teil des Reaktors im Gegenstrom und im unteren Teil im Gleichstrom zu einem reagierenden Fluid A geführt wird.

Fig. 4 zeigt geeignete Querschnittsformen für die Wellstrukturen 4. Neben der Ausbildung mit geraden, durchgehenden Kanälen können auch technisch übliche Formen mit zickzackförmiger Kanalführung zum Einsatz kommen. Außerdem kann es zweckmäßig sein, im Bereich der Reaktionszone eine Folge von Katalysatoren unterschiedlicher Aktivität oder Spezifizität einzusetzen. Das läßt sich in dem erfindungsgemäßen Reaktor einfach dadurch erreichen, daß Abschnitte von Wellstrukturen 4, die mit unterschiedlichem Katalysator beschichtet sind, hintereinander angeordnet werden.

Schließlich kann es auch sinnvoll sein, größere Strömungsquerschnitte auf der Seite des Fluids A als auf der Seite des Fluids B vorzusehen. Das läßt sich erfindungsgemäß einfach dadurch erreichen, daß bei der Faltung der ziehharmonikaförmigen Trennwand 1 unterschiedliche Breiten der Strömungskanäle 5 vorgesehen werden und Strukturen 4 mit unterschiedlichen, an die Breite der Kanäle 5 angepaßten Amplituden verwendet werden.

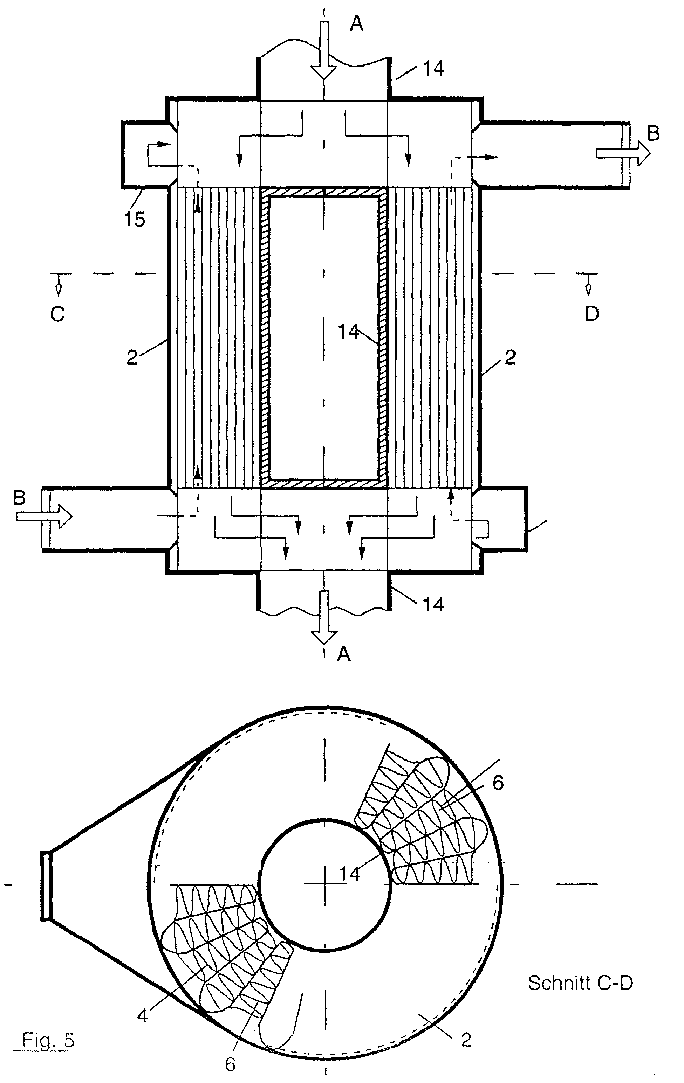

Eine besondere Ausgestaltung der letztgenannten Variante stellt die Anordnung der ziehharmonikaförmigen Trennwand in einem Ringspalt gemäß Fig. 5 dar. Fluid A tritt in diesem Beispiel durch das Innenrohr 14 ein und verteilt sich auf die Strömungspfade 6, die durch die Wellstruktur 4 mit den inneren Falten der Trennwand 1 gebildet werden. Am unteren Ende des Reaktors strömt es in gleicher Weise in das Innenrohr 14 zurück. Fluid B wird über einen Ringraum 15 im äußeren Mantel zugeführt und strömt im Gleich- oder Gegenstrom zu Fluid A durch die äußeren Falten der Trennwand 1 durch den Apparat, wonach es den Apparat über einen weiteren Ringraum 15 verläßt. Die in Fig. 3 Mitte und rechts angegebenen Varianten lassen sich in analoger Weise in einer Konfiguration nach Fig. 5 realisieren. Ist Fluid B in Fig. 5 ein flüssiger Wärmeträger, so können die Wellstrukturen 4 zur Verbesserung des Wärmeübergangs in den Strömungskanälen 5 für Fluid B gegebenenfalls auch entfallen.

Zur besseren Verteilung der Fluide A, B auf die Breite der Strömungskanäle 5 kann es sinnvoll sein, im Ein- und ggf. auch im Auslaufbereich 7, 8 Spacerstrukturen einzusetzen, die für eine gute Quervermischung sorgen. Dafür bieten sich z.B. gekreuzte Stegstrukturen, Drahtgeflechte oder gekreuzte Wellstrukturen an.

Außerdem kann es sinnvoll sein, den Spalt zwischen der gefalteten Trennwand 1 und dem Reaktormantel 2 bzw. dem Innenrohr 4 durch Dichtmaterial (Dichtmatten, Blähton) zusätzlich abzudichten.

### Bezugszeichenliste:

- 1: Trennwand (ziehharmonikaftirmig)
- 2: Reaktormantel
- 3: Katalysator (auf Strukturen 4 aufgebracht)
- 4: Wellstruktur
- 5: Strömungskanäle, gebildet durch Falten von 1
- 6: Strömungspfade zwischen Wellstruktur 4 und Wand 1
- 7: Fluideinlaß in Reaktor
- 8: Fluidauslaß aus Reaktor
- 9: Strömungsweg Fluid 1
- 10: Strömungsweg Fluid 2
- 11: obere Stirnseite des Reaktors
- 12: untere Stirnseite des Reaktors
- 13: Heiz-/Kühleinrichtung an Stirnseite
- 14: Innenrohr
- 15: ringförmiger Verteilkanal im Reaktormantel 2

## Patentansprüche

1. Reaktor für katalysierte Gas-, Gas/Flüssigkeits- und Flüssigkeitsreaktionen mit zwei parallelen, durch fluidundurchlässige Wände getrennten Strömungswegen, **dadurch gekennzeichnet, dass** die die beiden Strömungswege (9), (10) trennenden Wände (1), die als Wärmetauscherplatten dienen, in Strömungsrichtung ziehharmonikaförmig gefaltet sind, so dass die einzelnen Falten Strömungskanäle (5) bilden, und der Katalysator (3) auf profilierten Strukturen (4) aufgebracht ist, die sich in diesen Kanälen (5) befinden, wobei die Strukturen (4)
a) mit der Wand durchgehende Strömungspfade (6) bilden,
b) einen guten Wärmeleitungsfluss zu den beiden benachbarten Wänden (1) bewirken und
c) für einen konstanten Abstand zwischen benachbarten Wänden (1) sorgen
und der Reaktor nach außen durch einen Mantel (2) abgeschlossen ist, der Ein- und Auslässe (7), (8) für die beiden Strömungswege (9), (10) enthält, wobei an den beiden Stirnseiten (11), (12) alle Strömungskanäle verschlossen sind. '

2. Reaktor nach Anspruch 1, **dadurch gekennzeichnet, dass** ein Strömungsweg (9) für die reagierenden Fluide und ein Strömungsweg (10) für einen strömenden Wärmeträger vorgesehen ist, wobei die profilierte Struktur (4) auf der Wärmeträgerseite keinen Katalysator enthält oder ganz fehlt.

3. Reaktor nach Anspruch 1, **dadurch gekennzeichnet, dass** ein Strömungsweg (9) für eine erste Reaktion und ein Strömungsweg (10) für eine zweite gleiche oder unterschiedliche Reaktion vorgesehen ist, die zu der ersten in Gleich- oder Gegenstrom geführt ist, so dass die in einem Strömungsweg freigesetzte Reaktionswärme auf den anderen Strömungsweg übertragbar ist.

4. Reaktor nach Anspruch 1 bis 3, **dadurch gekennzeichnet, dass** es sich bei den Strukturen (4) um durchgehend gewellte Strukturen von sinusförmiger, dreieckförmiger, trapezförmiger oder rechteckförmiger Profilierung handelt, so dass die Strömungspfade (6) im Wesentlichen in Längsrichtung verlaufen, wobei die Strukturen (4) im Bereich der Ein- und Auslässe (7), (8) so abgeschrägt oder ausgespart sind, dass eine Zu/Abströmung über die gesamte Tiefe der Strömungskanäle (5) erfolgt.

5. Reaktor nach Anspruch 1 bis 4, **dadurch gekennzeichnet, dass** in den für reagierende Fluide vorgesehenen Strömungskanäle (5) Strukturen (4) so hintereinander angeordnet sind, dass sich Stufungen in der katalytischen Aktivität und Spezifizität ergeben.

6. Reaktor nach Anspruch 1 bis 5, **dadurch gekennzeichnet, dass** zusätzlich zu den Ein- und Auslässen (7), (8) an den Reaktorenden weitere Ein- und Auslässe über die Reaktorlänge verteilt angeordnet sind.

7. Reaktor nach Anspruch 1 bis 6, **dadurch gekennzeichnet, dass** die ziehharmonikaförmig gefaltete Wand (1) so um ein Innenrohr (14) gelegt ist, dass die Strömungswege (9) und (10) im Ringraum, gebildet vom Innenrohr (14)und dem äußeren Reaktormantel (2), verlaufen und Zu- und Ablauf für ein Fluid über das Innenrohr (14), für ein anderes Fluid über einen ringförmigen Verteilkanal (15) im Außenmantel (2) erfolgen.

8. Reaktor nach Anspruch 1 bis 7, **dadurch gekennzeichnet, dass** die ziehharmonikaförmige Wand (1) auf einer bestimmten Höhe des Reaktors durchbrochen ist oder fehlt, so dass sich die Strömungswege (9), (10) ganz oder teilweise vereinigen.

9. Reaktor nach Anspruch 1 bis 7, **dadurch gekennzeichnet, dass** die Wand (1) an einem Ende des Reaktors fehlt oder durchbrochen ist und der Zulauf für Strömungsweg (9) sowie der Ablauf für Strömungsweg (10) beide am anderen Ende des Reaktors liegen, so dass sich ein Gegenstrom des gleichen Fluids mit einseitiger Umlenkung einstellt.

10. Reaktor nach Anspruch 9, **dadurch gekennzeichnet, dass** im Bereich der Umlenkung eine Heizung oder Kühlung angebracht ist.

11. Reaktor nach Anspruch 1 bis 10, **dadurch gekennzeichnet, dass** im Reaktionsbereich auch die Wände (1) mit Katalysator beschichtet sind.

12. Reaktor nach Anspruch 1 bis 11, **dadurch gekennzeichnet, dass** in den wellstrukturierten Teilen der Strömungskanäle (5) im Bereich der Ein- oder Auslaufbereiche (7), (8) Spacerstrukturen eingesetzt werden, die für eine gute Verteilung des Fluids über die gesamte Tiefe der Strömungskanäle (5) sorgen.

13. Reaktor nach Anspruch 1 bis 12, **dadurch gekennzeichnet, dass** der Reaktor aus profilierten und miteinander verbundenen Kunststofffolien oder metallischen Blechen besteht.

14. Reaktor nach Anspruch 1 bis 13, **dadurch gekennzeichnet, dass** der Reaktor teilweise aus extrudierten, polymeren oder keramischen Formmassen oder extrudierten oder stranggegossenen Metallen besteht.

15. Verwendung eines Reaktors nach einem der Ansprüche 1 bis 14 zum vorwiegenden oder ausschließlichen Wärmetausch zwischen mehreren Fluiden.

## Claims

1. Reactor for catalytic reactions of gas, gas/liquid and liquid with two parallel flow routes separated by fluid-impermeable walls, **wherein** the walls (1), serving as heat exchange plates and separating the two flow routes (9), (10), are folded in manner similar to that of an accordion, in the direction of flow, so that the single folds form flow channels (5) and the catalyst (3) is deposited on profiled structures (4) which are located in these channels (5), whereas the structures (4)
a) together with the wall, form continuous flow routes (6),
b) produce a good heat transfer flow to the two neighbouring walls (1), and
c) provide for a constant clearance between neighbouring walls (1)
and the reactor is closed off to the outside by means of a shell casing (2), containing inlet and outlets (7), (8) for the two flow routes (9), (10) where, on the two face sides (11), (12), all flow channels of closed off.

2. Reactor according to Claim 1, **wherein** a flow route (9) is envisaged for the reacting fluids and a flow route (10) is envisaged for a flowing heat carrier, where the profiled structure (4) contains no catalyst on the heat carrier side, or is missing completely.

3. Reactor according to Claim 1, **wherein** a flow route (9) is envisaged for a first reaction and a flow route (10) is envisaged for a second similar or different reaction which is led to the first in the same or counter flow, so that the reaction heat released in one flow route is transferable to the other flow route.

4. Reactor according to Claim 1 to 3, **wherein** the structures concerned (4) are continuously corrugated structures with a sinus-shaped, triangular, trapezoidal or rectangular profile, so that the flow paths (6) essentially run in the longitudinal direction, where the structures (4) in the zone of the inlets and outlets (7), (8) are bevelled or recessed in such a way that there is an inflow and an outflow over the entire depth of the flow channels (5).

5. Reactor according to Claim 1 to 4, **wherein** in the flow channels (5) envisaged for reacting fluids, structures (4) are arranged in successive order in such a way that stages result in the catalytic activity and specificity.

6. Reactor according to Claim 1 to 5, **wherein** in addition to the inlets and outlets (7), (8) at the reactors, further inlets and outlets are arranged and distributed over the entire length of the reactor.

7. Reactor according to Claim 1 to 6, **wherein** the wall (1), folded in the manner of an accordion, is positioned around an inner tube (14) in such a way that the flow routes (9) and (10) run in the annular space, formed by the inner tube (14) and the external reactor shell casing (2), and a feed-in and return route is established for a fluid by way of the inner tube (14), and for another fluid by way of an annular-shaped distribution channel (15) in the external shell casing (2).

8. Reactor according to Claim 1 to 7, **wherein** the accordion-shaped wall (1) is broken through on a certain level of the reactor, or is missing, so that the flow routes (9), (10) unite completely or partially.

9. Reactor according to Claim 1 to 7, **wherein** the wall (1) at one end of the reactor is missing or broken through, and the feed-in for flow route (9) as well as the return route for flow route (10) are both lying at the other end of the reactor, so that a counter flow of the same fluid with lateral deflection is established.

10. Reactor according to Claim 9, **wherein** a heating or a cooling is arranged in the zone of the deflection.

11. Reactor according to Claim 1 to 10, **wherein** in the reaction zone, also the walls (1) are coated with catalyst.

12. Reactor according to Claim 1 to 11, **wherein** in the corrugated-structured parts of the flow channels (5) in the area of the inlet and outlet zones (7), (8), spacer structures are placed which provide for a good distribution of the fluid over the entire depth of the flow channels (5).

13. Reactor according to Claim 1 to 12, **wherein** the reactor consists of profiled and synthetic foils, or of metallic sheet plates, joined together.

14. Reactor according to Claim 1 to 13, **wherein** the reactor partially consists of extruded, polymer or ceramic form masses, or extruded or continuously cast metals.

15. Use of a reactor according to one of the Claims 1 to 14 for a predominant or exclusive heat exchange between several fluids.

## Revendications

1. Réacteur pour des réactions catalytiques de gaz, de gaz/liquides et de liquides comportant deux chemins de passage parallèles, séparés par des cloisons imperméables aux fluides,
**Caractérisé en ce que**
les cloisons (1) qui séparent les deux chemins de passage (9, 10) et servent de plaques d'échange de chaleur sont pliées en accordéon dans la direction de passage pour que les différents plis forment les canaux de passage (5) et le catalyseur (3) est appliqué sur les structures profilées (4) qui se trouvent dans ces canaux (5), alors que
les structures (4)
a) forment les chemins de passage (6) continus avec la paroi
b) produisent une bonne conduction thermique vers les deux parois voisines (1) et
c) assurent une distance constante entre les parois voisines (1),
et le réacteur est fermé vers l'extérieur par une enveloppe (2) comportant des entrées et sorties (7, 8) pour les deux chemins de passage (9, 10), tous les canaux de passages étant fermés au niveau des deux phases frontales en (11, 12).

2. Réacteur selon la revendication 1,
**caractérisé par**
un chemin de passage (9) pour les fluides en réaction et un chemin de passage (10) pour un caloporteur en écoulement,
la structure profilée (4) ne comportant pas de catalyseur du côté du caloporteur, ou manquant complètement.

3. Réacteur selon la revendication 1,
**caractérisé par**
un chemin de passage (9) pour une première réaction et un chemin de passage (10) pour une seconde réaction identique ou différente, conduite à contre courant ou à courants parallèles avec la première réaction, de façon que la chaleur de réaction libérée dans le premier chemin de passage soit transmise à l'autre chemin de passage.

4. Réaction selon les revendications 1 à 3,
**caractérisé en ce que**
les structures (4) sont des structures ondulées continues à profil sinusoïdal, triangulaire, trapézoïdale ou rectangulaire de façon que les chemins de passage (6) soient essentiellement dirigés dans la direction longitudinale, les structures (4) étant coupées en biais ou découpées au niveau des entrées et sorties (7, 8) pour que l'arrivée / sortie se fassent sur toute la profondeur des canaux de passage (5).

5. Réaction selon les revendications 1 à 4,
**caractérisé en ce que**
des structures (4) sont placées les unes derrières les autres dans les canaux de passage (5) recevant les fluides en réaction de manière à obtenir une activité et une spécificité catalytique étagées.

6. Réacteur selon les revendications 1 à 5,
**caractérisé en ce qu'**
en plus des entrées et sorties (7, 8), les extrémités des réacteurs comportent d'autres entrées et sorties réparties sur la longueur du réacteur.

7. Réacteur selon les revendications 1 à 6,
**caractérisé en ce que**
la cloison (1) pliée en accordéon est installée autour d'un tube intérieur (14) pour que les chemins de passage (9, 10) passent dans le volume intérieur formé entre le tube intérieur (14) et l'enveloppe extérieure (2) du réacteur, et l'alimentation et l'évacuation de fluide se font par le tube intérieur (14) pour un autre fluide par un canal de répartition (15), annulaire au niveau de l'enveloppe extérieure (2).

8. Réacteur selon les revendications 1 à 7,
**caractérisé en ce que**
la cloison (1) pliée en accordéon est coupée à une certaine hauteur du réacteur ou fait défaut à une certaine hauteur du réacteur pour que les chemins de passage (9, 10) se réunissent complètement ou partiellement.

9. Réacteur selon les revendications 1 à 7,
**caractérisé en ce que**
la paroi (1) manque à une extrémité du réacteur où est interrompue, et l'alimentation pour le chemin de passage (9) ainsi que la sortie pour le chemin de passage (10) se situent toutes deux à l'autre extrémité du réacteur pour qu'il s'établisse un contre courant du même fluide avec une déviation d'un côté.

10. Réacteur selon la revendication 9,
**caractérisé par**
un moyen de chauffage ou de refroidissement prévu au niveau de la déviation.

11. Réacteur selon les revendications 1 à 10,
**caractérisé en ce que**
dans la zone de réaction, les parois (1) sont également revêtues de catalyseurs.

12. Réacteur selon les revendications 1 à 11,
**caractérisé en ce que**
des structures d'écartement sont placées dans les parties à structure ondulée des canaux de passage (5) au niveau des zones d'entrée ou de sortie (7, 8), ces structures d'écartement assurant une bonne répartition du fluide sur toute la profondeur des canaux de passage (5).

13. Réacteur selon les revendications 1 à 12,
**caractérisé en ce qu'**
il est formé de feuilles de matière plastique profilées et reliées entre elles ou de tôles métalliques.

14. Réacteur selon les revendications 1 à 13,
**caractérisé en ce qu'**
il est formé partiellement de masses extrudées, de polymère ou de céramique, moulé ou extrudé ou de métaux étirés.

15. Application d'un réacteur selon les revendications 1 à 14 pour assurer l'échange de chaleur préférentiel ou exclusif entre plusieurs fluides.
